**Europäisches Patentamt**

**European Patent Office**

**Office européen des brevets**

(19)

(11) Veröffentlichungsnummer: **0 174 569**
**B1**

(12) ## EUROPÄISCHE PATENTSCHRIFT

(45) Veröffentlichungstag der Patentschrift:
**08.02.89**

(51) Int. Cl.⁴: **A 01 D 80/02**

(21) Anmeldenummer: **85110934.8**

(22) Anmeldetag: **30.08.85**

(54) Heuwerbungsmaschine.

(30) Priorität: **10.09.84 DE 3433172**

(43) Veröffentlichungstag der Anmeldung:
**19.03.86 Patentblatt 86/12**

(45) Bekanntmachung des Hinweises auf die Patenterteilung:
**08.02.89 Patentblatt 89/6**

(84) Benannte Vertragsstaaten:
**AT BE CH FR GB IT LI NL**

(56) Entgegenhaltungen:
**AT-B- 288 080**
**AT-B- 360 259**
**DE-A- 2 711 158**

(73) Patentinhaber: **Klöckner-Humboldt-Deutz AG**
**Zweigniederlassung Fahr, D-7702 Gottmadingen (DE)**

(72) Erfinder: **Wessel, Ulrich, Ing., Hilzingerstrasse 33,**
**D-7702 Gottmadingen (DE)**

(74) Vertreter: **Patentanwälte Grünecker, Kinkeldey,**
**Stockmair & Partner, Maximilianstrasse 58,**
**D-8000 München 22 (DE)**

ACTORUM AG

## Beschreibung

Die Erfindung bezieht sich auf eine Heuwerbungsmaschine mit mindestens einem drehantreibbar gelagerten Rechkreisel, der über mehrere Tragarme für eine Vielzahl elastischer Doppelfederzinken verfügt, wobei jeder Doppelfederzinken Federwindungen aufweist, an die sich in den äusseren Bereichen Zinkenschenkel anschliessen, die sich im wesentlichen in derselben Ebene erstrecken und die etwa im Bereich der Federwindungen derart abgeknickt sind, dass der bodennahe Abstand kleiner als der im Bereich der Federwindungen liegende Abstand der Zinkenschenkel ist.

Derartige Heuwerbungsmaschinen können zum Zetten, Wenden oder Schwaden eingesetzt werden, wobei der oder die Rechkreisel mit den Tragarmen von der Zapfwelle des Traktors aus angetrieben wird. Die an den Tragarmen befestigten elastischen Doppelfederzinken können z.B. das Erntegut portionsweise gegen einen Schwadformer führen, woduch ein lockerer Schwad abgelegt wird.

Eine Heuwerbungsmaschine, die einen Schwad bildet, ist aus der DE-A-27 11 158 bekanntgeworden. Die Doppelfederzinken sind bei dieser Konstruktion so ausgebildet, dass der Abstand der Zinkenschenkel im Bereich der Federwindungen des Doppelfederzinkens grösser ist als der bodennahe Abstand der Zinkenschenkel. Eine derartige Ausbildung erlaubt es, die Doppelfederzinken so an den Tragarmen der Heuwerbungsmaschine zu befestigen, dass die Abstände der Zinkenschenkel untereinander und die Abstände der Zinkenschenkel benachbarter Doppelfederzinken voneinander in Bodennähe gleich gross sein können. Die Zinkenschenkel der vorbekannten Doppelfederzinken verlaufen in ihrem mittleren Bereich etwa parallel zueinander und sind – bezogen auf die Drehachse des Rechkreisels – nach aussen gerichtet. Zudem sind die Zinkenschenkel in den äusseren Bereichen der Federwindungen des Doppelfederzinkens in unterschiedlichen Höhen nach aussen abgeknickt.

Da die Doppelfederzinken bei der Heuwerbungsmaschine nach der DE-A-27 11 158 bzgl. ihrer Befestigungsstellen an den Tragarmen asymmetrisch ausgebildet sind, können diese Doppelfederzinken nur für eine bestimmte Drehrichtung eingesetzt werden, in der die Zinken jeweils so belastet werden, dass sich ihre Federwindungen zusammenziehen.

Der vorliegenden Erfindung liegt die Aufgabe zugrunde, einen Doppelfederzinken für eine Heuwerbungsmaschine zu schaffen, der unter Beibehaltung des Vorteils gleichbleibender bodennaher Abstände sowohl für eine rechts- als auch linksabschwadende Maschine gleichermassen eingesetzt werden kann.

Ausgehend von einer Heuwerbungsmaschine der eingangs genannten Art wird zur Lösung dieser Aufgabe vorgeschlagen, dass die Zinkenschenkel bzgl. ihrer durch ihre Befestigungsstelle am Tragarm verlaufende Längsachse spiegelbildlich angeordnet sind und dass beide Zinkenschenkel – bezogen auf ihre Längsachse – in Richtung zueinander abgekröpft bzw. abgeknickt sind.

Die erfindungsgemässen Doppelfederzinken lassen sich am Tragarm der Heuwerbungsmaschine so befestigen, dass deren Zinkenschenkel im bodennahen Bereich gleiche Abstände aufweisen. Es ist ferner möglich, die Doppelfederzinken sowohl bei einer rechts- als auch linksabschwadenden Heuwerbungsmaschine zu verwenden. Die symmetrische Ausgestaltung der Doppelfederzinken gestattet es, diese wahlweise in um 180° versetzt liegende Stellungen so an den Tragarmen der Heuwerbungsmaschine zu befestigen, dass die Doppelfederzinken – abhängig von der Drehrichtung der Heuwerbungsmaschine – immer so belastet werden, dass sich deren Federwindungen zusammenziehen. Neben der einfacheren Herstellung dieses Doppelfederzinkens ist es von grossem Vorteil, dass der Doppelfederzinken für Maschinen mit unterschiedlichen Drehrichtungen gleich ausgebildet ist, so dass auch die Ersatzteilhaltung vereinfacht wird.

Im folgenden wird die Erfindung anhand der Zeichnung näher erläutert, in der vorteilhafte Ausführungsbeispiele dargestellt sind.

Es zeigen:

Fig. 1 die schematische Darstellung eines Tragarms einer Heuwerbungsmaschine mit einem ersten Ausführungsbeispiel eines erfindungsgemäss ausgestalteten Doppelfederzinkens und

Fig. 2 ein weiteres Ausführungsbeispiel eines erfindungsgemässen Doppelfederzinkens.

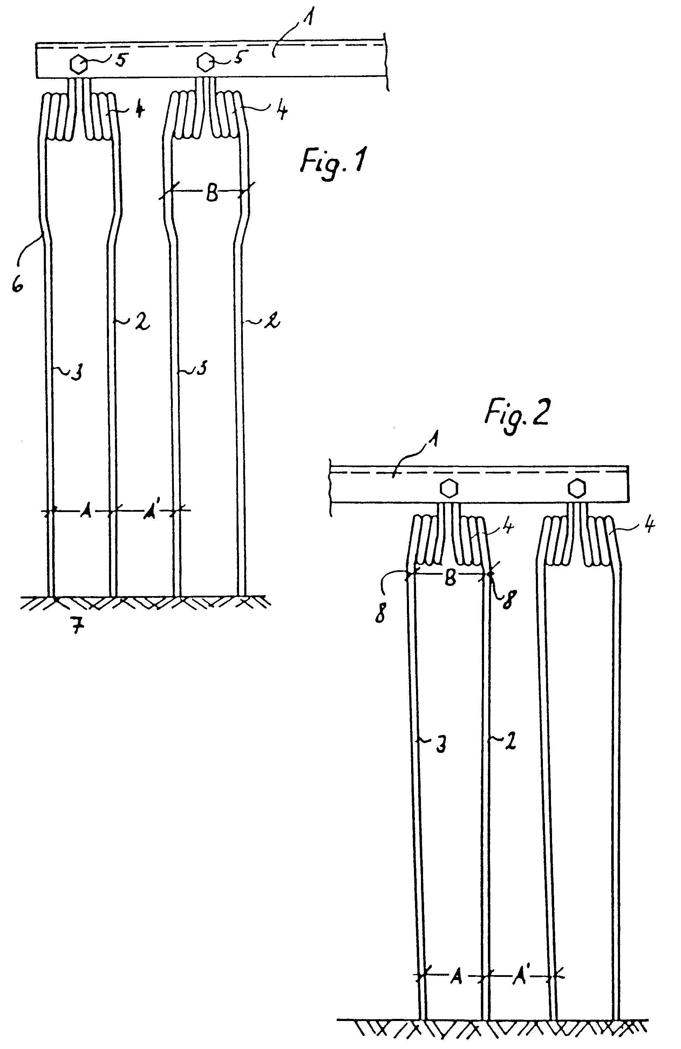

In Fig. 1 ist schematisch ein Tragarm 1 einer Heuwerbungsmaschine, z.B. eines Kreiselschwaders dargestellt, der mit zwei Doppelfederzinken versehen ist. Jeder Doppelfederzinken besteht aus Federwindungen 4, an die sich in deren äusseren Bereichen Zinkenschenkel 2 und 3 anschliessen.

Die Doppelfederzinken sind mit Hilfe von Schraubverbindungen 5 mit dem Tragarm 1 verbunden. Die Zinkenschenkel 2 und 3 weisen etwa in ihrem oberen Drittel Kröpfstellen 6 auf, wodurch der grössere Abstand der Zinkenschenkel 2, 3 im Bereich der Federwindungen derart verändert wird, dass die Zinkenschenkel 2, 3 im bodennahen Bereich einen geringeren Abstand aufweisen. Damit lässt sich ein äquidistanter Abstand A' zwischen den Zinkenschenkeln 2 und 3 benachbarter Doppelfederzinken mit den Abständen A der Zinkenschenkel 2, 3 eines Doppelfederzinkens voneinander herstellen.

Bei dem in Fig. 2 dargestellten Ausführungsbeispiel weisen die Zinkenschenkel 2, 3 eines jeden Doppelfederzinkens anstelle einer Kröpfstelle eine Knickstelle im Bereich der Federwindungen 4 auf, so dass die beiden Zinkenschenkel 2, 3 in Richtung zueinander etwas abgebogen werden. Dadurch können in Bodennähe auch hier äquidistante Abstände sämtlicher mit dem Futter in Berührung gelangender Zinkenschenkelenden erzielt werden.

Aus den beschriebenen Ausführungsbeispielen zweier erfindungsgemässer Doppelfederzinken geht deren symmetrische Ausgestaltung bzgl. ihrer durch ihre Befestigungsstelle am Tragarm verlaufende Längsachse hervor. Auf diese Weise lassen sich äquidistante Abstände der Zinkenschenkel im bodennahen Bereich erzielen. Die Doppelfederzinken können – je nach Drehrichtung der Heuwerbungsmaschine – in um 180° versetzt liegende Stellungen an den Tragarmen befestigt werden, so dass die Doppelfederzinken unabhängig von der Drehrichtung der Heuwerbungsmaschine immer so belastet werden, dass sich ihre Federwindungen zusammenziehen, was die Lebensdauer der Doppelfederzinken erhöht. Da die Doppelfederzinken – unabhängig von der Drehrichtung der Heuwerbungsmaschine – in jedem Fall gleich ausgebildet sind, ist die Herstellung einfach und kostengünstig. Die Ausbildung des Doppelfederzinkens als Gleichteil gestattet eine vereinfachte Lager- bzw. Ersatzteilhaltung.

## Patentanspruch

Heuwerbungsmaschine mit mindestens einem drehantreibbar gelagerten Rechkreisel, der über mehrere Tragarme für eine Vielzahl elastischer Doppelfederzinken verfügt, wobei jeder Doppelfederzinken Federwindungen derart abgeknickt sind, dass der bodennahe Abstand (A) kleiner als der im Bereich der Federwindungen liegende Abstand (B) der Zinkenschenkel ist, dadurch gekennzeichnet, dass die Zinkenschenkel (2, 3) eines Doppelfederzinkens bezüglich einer durch die Befestitungsstelle (5) des Doppelfederzinkens am Tragarm (1) verlaufenden Symmetrieachse spiegelsymmetrisch zueinander angeordnet sind und dass beide Zinkenschenkel (2, 3) in Richtung zueinander abgekröpft bzw. abgeknickt sind.

## Claim

Hay-making machine with at least one rotary rake, which is mounted so as to be rotatably drivable and has a plurality of supporting arms for supporting a plurality of resilient double spring tines, having spring coils which are connected, in the outer regions, to tine shanks which extend substantially in the same plane and are bent substantially in the region of the spring coils in such a manner that the spacing (A) between the tine legs, near the ground is less than the spacing (B) in the region of the spring coils, characterised in that the tine shanks (2, 3) of one double spring tine are disposed mirror-symmetrically relative to each other in respect of an axis of symmetry extending through the location (5) where the double spring tine is mounted on the supporting arm (1), and in that both tine shanks (2, 3) are cranked or bent towards each other.

## Revendication

Machine de fenaison avec au moins un rateau rotatif fixé de façon à pouvoir être entraîne en rotation, qui dispose d'une pluralité de dents doubles à ressort élastiques par l'intermédiaire de plusieurs bras-supports, chaque dent double à ressort présentant des enroulements de ressort auxquels se raccordent dans les domaines externes des branches de dents qui s'étendent essentiellement dans le même plan et qui sont courbées à peu près dans le domaine des enroulements de ressort de telle façon que la distance A au voisinage du sol est inférieure à la distance B des branches de dents dans le domaine des enroulements de ressort, caractérisée en ce que les branches de dents (2, 3) d'une dent double à ressort sont disposées de façon symétrique dans un miroir par rapport à un axe de symétrie passant par le point de fixation (5) de la dent double à ressort au bras-support (1) et en ce que les deux branches de dents (2, 3) sont courbées ou coudées l'une vers l'autre.

Fig. 1

Fig. 2

5